# EUROPEAN PATENT SPECIFICATION

(11) **EP 4 083 492 B1**
(45) Date of publication and mention of the grant of the patent: **23.10.2024**
(21) Application number: 22020096.8
(22) Date of filing: 07.03.2022
(51) Int. Cl.: F16N 19/00, F16N 37/00, F16N 39/00, F25B 45/00, B65D 51/30, B65D 81/26

(54) **DESICCANT CARTRIDGE, LUBRICANT RECHARGING CONTAINER AND RELATED RECHARGING STATION**
TROCKENMITTELKARTUSCHE, SCHMIERMITTELFÜLLBEHÄLTER UND ZUGHÖRIGE LADESTATION
CARTOUCHE DÉSHYDRATANTE, BIDON DE RECHARGE DE LUBRIFIANT ET STATION DE RECHARGE CONNEXE

(30) Priority: 28.04.2021 IT 202100010733
(43) Date of publication of application: 02.11.2022
(73) Proprietor: Quadrante s.r.l., 50041 Calenzano (FI) (IT)
(72) Inventor: Poli, Stefano, 50041 Calenzano (FI) (IT)

(56) References cited:
- EP-B1- 3 243 677
- WO-A1-2011/041874
- WO-A1-97/30775
- KR-A- 20120 064 737
- US-A- 5 580 451

## Description

### TECHNOLOGY FIELD

The present invention concerns a desiccant cartridge for lubricant recharging containers for recharging stations of a refrigerant fluid in a motor vehicle air conditioning system. The present invention also concerns a lubricant recharging container and a related recharging station for a refrigerant in a motor vehicle air conditioning system.

### BACKGROUND ART

In the state of the art, the use of lubricant recharging containers for recharging stations of a refrigerant fluid in a motor vehicle air conditioning system is known. During the recharging of the refrigerant fluid in the air conditioning system of a motor vehicle, the refrigerant present in the air conditioning system is extracted and together with it the lubricant used to lubricate the compressor is inevitably extracted too. This side effect requires new lubricant to be introduced into the air conditioning system in place of the amount of lubricant extracted with the refrigerant and the used lubricant must be collected.

Normally the new lubricant to be introduced into the system is stored in a recharging container, while the used lubricant is collected in an additional lubricant collecting container.

Since the lubricating lubricants used in this field are characterized by a high hygroscopicity, it follows that the lubricant stored in the recharging container can absorb, before being introduced into the air conditioning system of the vehicle, a certain amount of humidity present in the air. This happens especially when the lubricant is withdrawn from the lubricant recharging container and inserted into the vehicle's air conditioning system, since the volume of lubricant extracted is replaced by the ambient air entering in the container. A small amount of water, deriving from the humidity of the air in the container, can therefore mix with the recharging lubricant and can be introduced into the vehicle's air conditioning system. This water, inside the vehicle's air conditioning system, can chemically react in conditions of high temperature and pressure and can polymerize, creating inconveniences to the compressor or malfunctions of the air conditioning system.

To avoid this, it is known to use hygroscopic materials to absorb the humidity present in these lubricant recharging containers.

A known solution is provided by the document WO2011041874, which describes a lubricant recharging container comprising a cap equipped with an air inlet valve, a dip tube and a quick connector for drawing lubricant from the container. This solution also involves introducing into the container a package of drying material in direct contact with the lubricant, to absorb the humidity present in the lubricant. This solution requires a particular type of drying material suitable for being immersed in a lubricating liquid, and also has the drawback that part of the drying material can disperse in the lubricant and subsequently can be inserted into the air conditioning system of the vehicle creating malfunctions.

A further solution known in the state of the art is described in document EP3243677. This solution provides a lubricant recharging container equipped with a cap that includes an inner compartment wherein a drying material is placed. Compared to the previous solution, this allows to avoid a direct contact of the drying material with the lubricant. Conversely, this solution does not allow an easy replacement of the drying material when its hygroscopic property is exhausted. This solution in fact requires to disassembly the cap, the removal of the hygroscopic material, with associated health risks, and the replacement of the hygroscopic material with something else that may not be suitable for the purpose. In practice, this solution does not allow a simple and rapid replacement of the drying material by the operator using the lubricant recharging container and the relative refrigerant recharging station in the vehicle's air conditioning system.

In the field of air conditioning systems, the use of cartridges containing desiccant material to dehydrate the refrigerant is known. An example in this sense is described in document US5718743. The cartridge containing desiccant material described in this document is used to dehydrate a stream of refrigerant that passes through the cartridge. This cartridge is hermetically connected to a desiccant filter to filter the refrigerant that passes through said filter. The refrigerant passes through the cartridge to escape, in the opposite direction, from the hole in the center of the cartridge itself. This cartridge therefore acts as a refrigerant filter, absorbing in a dynamic manner the humidity present in the refrigerant that passes through the cartridge. This cartridge therefore solves a technical problem different from the one prefixed by the present invention, thus the problem of absorbing humidity from a fluid that passes through it, with a direct and dynamic contact of the fluid with the drying material. In addition, this solution, like that of the document WO2011041874, envisages a humidity absorption from the fluid through a direct contact and not a dehydration of the air present in the container. Finally, this solution concerns a part of the recharging station that is different from the lubricant recharging container. Another solution is provided by document KR20120064737 wherein a cartridge is used to dehumidify and deoxygenate an airflow entering in a pouring cork that is used for closing a container.

A disposable solution applicable to the mouth of a container capable of containing lubricant for a refrigerant recharging station is therefore not known. It's also not known an eco-friendly solution that allows to minimize the risks for an operator handling the recharging station and the relative container with lubricant. Finally, a solution that allows a modularity of the lubricant container is not known, i.e. the possibility of transforming a traditional container for lubricant into a container with hygroscopic functionality. Finally, it is not known a device of this type that is simple to assemble and cheap to produce.

### SUMMARY

The aforementioned drawbacks of the prior art are now solved by a first object of the present invention which consists of a desiccant cartridge for a lubricant refill canister comprising a mouth and a compartment for containing the lubricant. Said cartridge comprises: a casing comprising a first casing portion and a second casing portion which can be coupled together and shaped so as to define a space together; a hygroscopic material placed inside said space of the casing. Said casing being shaped to be inserted at least partially inside said mouth of the refill canister. Said casing also comprising a rim shaped to make a stop of the casing with a border of said mouth to prevent the cartridge from coming into contact with the lubricant contained in the canister. Said casing comprising a through channel and a plurality of holes designed to fluidly connect the casing space with the canister compartment in continuous manner. The desiccant cartridge thus conceived can be added to a traditional refill canister, thus transforming it into a canister with hygroscopic properties. Furthermore, the cartridge thus conceived keeps the lubricant in the container at a distance from the hygroscopic material, thus avoiding contamination of the lubricant and deterioration of the hygroscopic material. The desiccant cartridge thus conceived also allows to quickly and economically replace the consumed hygroscopic material with new one.

Preferably the casing can have a cylindrical shape and consequently said rim is an annular flange arranged externally to the casing. This conformation is such if the mouth of the refill canister has a cylindrical mouth as it normally occurs due to the tightening thread of the cap. In the case of a different closure system, for example interlocking, the opening can have another shape, for example a parallelepiped shape, and consequently, the shape of the casing will also be parallelepiped. Basically, the external shape of the casing is complementary to the internal shape of the mouth of the refill canister. This conformation of the casing allows to maximize the size of the space within which the hygroscopic material is located, in order to increase its availability.

In particular, the through channel can have a cylindrical shape and is coaxial to the casing. This shape allows the dip tube to pass through the desiccant cartridge, in order to draw the lubricant from the bottom of the refill canister. The through channel is therefore sized in such a way as to allow the transit of the dip tube.

Advantageously, said first casing portion and said second casing portion can be shaped to be interlocked together. This type of interconnection allows the desiccant cartridge to be assembled quickly and easily.

In particular, said first portion of casing can be shaped so as to form a collector within which the hygroscopic material is arranged and said second portion of casing can be shaped so as to provide a lid for closing said collector. In this way the space is quickly filled with bulk hygroscopic material, such as silica gel. Subsequently, the space is closed by means of said lid, the space is closed and the hygroscopic material trapped in the space. Preferably, the hygroscopic material may be a silica gel with color indicator, i.e. silica gel beads configured to change color once they absorb water. In this way it is visually perceptible when the hygroscopic material is exhausted. In this case it is preferable that the shell of the space is translucent or transparent, to allow a perception of the color change of the hygroscopic material.

Preferably, said plurality of holes can be arranged on a lower wall of the casing. In this way, the fluid connection between the space and the canister compartment is direct and consequently, the air above the lubricant, as well as the lubricant itself, are in constant fluid connection with the hygroscopic material, allowing them to dehydrate. Alternatively, said plurality of holes can be arranged both on the lower wall and on an upper wall of the casing, allowing the dehydration of the air that is below and above the cartridge, for example the air that enters the refill canister through a hole or a valve arranged on the canister itself or on its cap. Preferably, said holes can be smaller than the particles of hygroscopic material in order to prevent them from falling into the containing compartment of the canister. This feature allows also to insert bulk hygroscopic material in the space, therefore without packaging, providing a lower impact on the environment and a lower cost of the cartridge.

A second object of the present invention is to provide a recharging container for lubricant comprising a refill canister for the lubricant, a desiccant cartridge and a cap. The canister in turn comprises a mouth and a compartment for containing the lubricant. A cartridge, in accordance with the first purpose of the present invention, can be associated with the mouth of said canister. The cap is configured to be connected to the canister to close it. Wherein said cap comprises a connector and a dip tube fluidly connected to each other, and said dip tube protrudes below the cap. In which the dip tube is shaped to fit into the through channel of the cartridge casing and substantially reaches the bottom of the compartment containing the lubricant. This type of lubricant recharging container allows to dispense the lubricant present in the refill canister and to simultaneously dehydrate the lubricant and the air present in it. Furthermore, the container thus shaped allows the hygroscopic material to be kept away from the lubricant and allows the cartridge to be easily replaced if necessary. The container thus conceived allows a passive dehydration of the lubricant, i.e. without the air or the lubricant having to pass through the cartridge to be dehydrated. The lubricant is dehydrated because the holes in the cartridge allow the water particles of the air present in the container to enter the space and to be absorbed by the hygroscopic material.

Preferably, said cap and said canister can be shaped so as to clamp together said cartridge when said cap is connected to said canister. This avoids unwanted movement of the cartridge. Furthermore, the rim of the cartridge can act as a seal between the cap and the canister.

Advantageously, the container can include an opening to admit air into the canister and allow the lubricant to leave the canister through the dip tube. Preferably, said cap opening can include a valve configured to allow air to enter the canister when the refill lubricant is extracted through said connector. This valve at the same time prevents the unwanted entry of air into the container when the lubricant is not withdrawn. In this way, the ambient air that enters the container is that strictly necessary for supplying the lubricant.

A third object of the present invention is a recharging station of a refrigerant fluid in an air-conditioning system for motor vehicles comprising at least one lubricant recharging container according to the second object of the present invention. The charging station thus conceived can introduce lubricant free of traces of humidity into the vehicle air conditioning system in an efficient and easy-to-maintain manner.

These and other advantages will emerge in more detail from the description, given below, of an example of embodiment given by way of non-limiting example with reference to the attached drawings.

### DRAWINGS DESCRIPTION

In the drawings:
Fig. 1 illustrates an axonometric view of a desiccant cartridge according to the present invention;
Fig. 2A illustrates a top view of the cartridge of Fig. 1;
Fig. 2B illustrates a sectional view of the cartridge of Fig. 2A;
Fig. 2C illustrates an enlarged view of a part of the section of the cartridge of Fig. 2B;
Fig. 3 illustrates an axonometric view of a recharging container for lubricant according to the present invention;
Fig. 4 shows an exploded view of the recharging container of Fig. 3;
Fig. 5A illustrates a side view of the container of Fig. 3;
Fig. 5B illustrates a sectional view of the container of Fig. 5A;
Fig. 5C illustrates an enlarged view of a part of the section of the container of Fig. 5B;
Fig. 6 illustrates an axonometric view of a recharging station according to the present invention;
Fig. 7 illustrates an axonometric view of a cap for a recharging container for lubricant according to the present invention;
Fig. 8A illustrates a side view of the cap of Fig. 6;
Fig. 8B illustrates a sectional view of the cap of Fig. 7A;
Fig. 8C illustrates an enlarged view of a part of the section of the cap of Fig. 7B.

### DETAILED DESCRIPTION

The following description of one or more ways of implementing the invention refers to the attached drawings. The same numerical references in the drawings identify the same or similar elements. The object of the invention is defined by the attached claims. The technical details, structures or characteristics of the solutions described below can be combined with each other in any way.

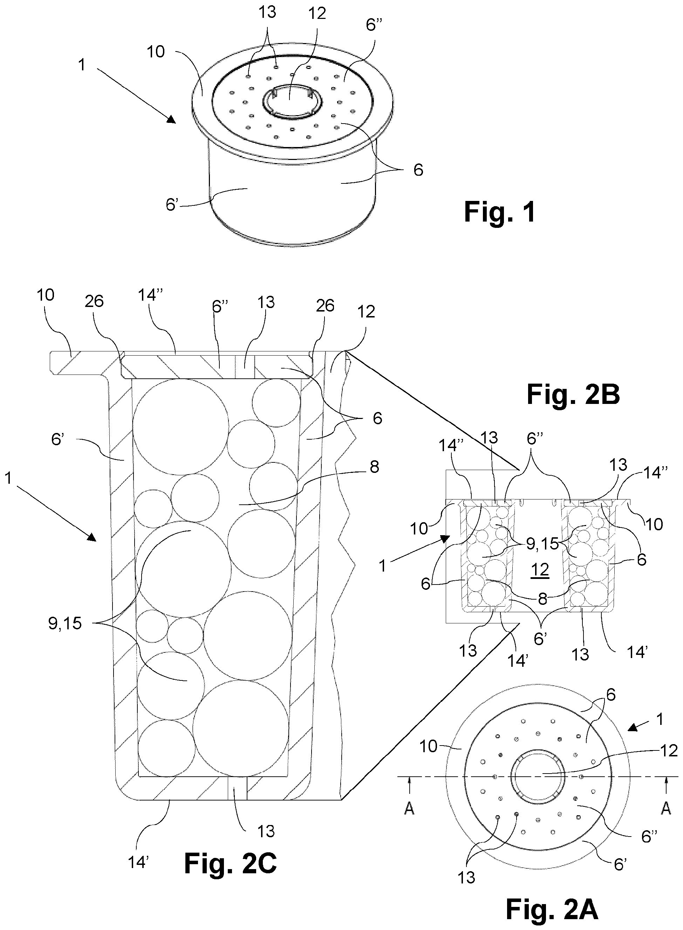

With reference to Fig. 1 is represented a desiccant cartridge 1 comprising an outer casing 6. The casing 6 of the cartridge 1 comprises a first lower portion 6' of the casing and a second upper portion 6" of the casing.

In particular, with reference to Fig. 2A,2B,2C, the first portion of casing 6' is conformed as a collector, also identified with reference 6', while the second portion of casing 6" is conformed to form a lid, also identified with reference 6", applicable to the collector 6" to close it.

Specifically, the lid 6" has a circular crown shape and has internal and external side edges shaped so as to achieve a mate coupling with corresponding counter-shaped grooves 26 of the collector 6'. In this way, by pushing the lid 6" inside these 26 grooves, this mate coupling is achieved and the lid 6" is permanently embedded in the collector 6'. Optionally, the lid 6" can comprise a notch that allows to remove the lid 6" via a lever, such as a flathead screwdriver.

The collector 6' is externally conformed as a hollow cylinder, preferably slightly flared as shown in Fig. 2B, 2C. Even internally the collector 6' is shaped like a hollow cylinder, due to the substantially constant thickness of the walls of the collector 6'.

When the lid 6" is coupled to the collector 6', a compartment is realized in the form of a hollow cylinder between the lid 6" and the collector 6'.

This space 8 is filled with hygroscopic material 9. Preferably, the hygroscopic material 9 completely fills the space 8 as shown in Fig. 2C. This filling operation can be performed by specialized personnel of the cartridge 1 manufacturer.

The hygroscopic material 9 is preferably silica gel or silica gel with color indicator and it's provided in the form of silica gel beads 15. If the silica gel is colorable, the material of casing 6 may be translucent such as that of canister 2.

Once the lid 6" is applied to the collector 6', the space 8 and the hygroscopic material 9 contained inside it can fluidly communicate with the outside through holes 13.

The holes 13 illustrated in Fig. 1, 2A, 2B, 2C, are provided both on the first portion of the casing 6' and on the second portion of the casing 6". In particular, the holes 13 are arranged both on the lowerwall 14' and on the upper wall 14" of the casing 6. In an alternative form not illustrated, the holes 13 are arranged only on the lower wall 14" of the casing 6, that is the one facing the lubricant 7, when the cartridge 1 is in an operating position inside the canister 2.

Alternatively, holes 13 can be realized on any wall of casing 6, for example on the side wall and/or side wall facing towards the through-channel 12. It is therefore sufficient that compartment 5 of canister 2 housing lubricant 7 is in fluid communication with space 8 and therefore can transfer the humidity contained in the canister 2 to the hygroscopic material 9.

These holes 13 shall be sized in such a way that particles 15 of hygroscopic material cannot fall into compartment 5 of canister 2, thus into the lubricant 7. Some alternatives allow to obtain this effect. A first possibility is to size holes 13 so that they have an opening section smaller than the size of particles 15 of the hygroscopic material 9. A second possibility is that of placing the holes 13 on the upper wall 14" and/or on the sidewalls but not on the lower side 14'. A third possibility is to enclose particles 15 of hygroscopic material 9 inside a breathable package.

As illustrated in Figs. 1,2A,2B and 2C, casing 6 includes a rim 10, which in this case, is shaped like an annular flange arranged on the outer wall of casing 6.

Alternatively, rim 10 can be discrete, thus not continuous like the flange in Fig. 1. In this case, rim 10 can include a series of radial protrusions angularly spaced apart, for example every 60° or 90°.

As better described in the following, rim 10 is used to prevent cartridge 1 from falling to the bottom of canister 2, thus coming into contact with lubricant 7.

Cartridge 1 also includes a through channel 12 that runs the cartridge 1 from side to side. The through channel 12 is realized by the inner wall of casing 6 and has a substantially cylindrical shape. Through channel 12 passes through the cartridge 1 from the top to the bottom according to the height of cartridge 1. As better described below, the width of the through channel 12 is such that it allows the passage of the dip tube 18 of cap 3.

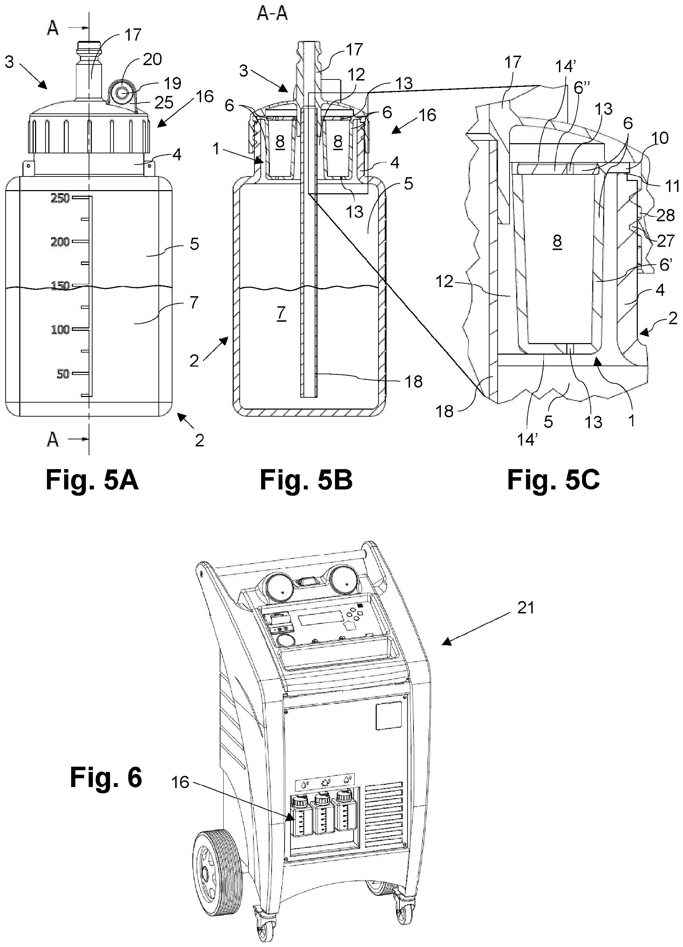

The height of cartridge 1 is basically equal to the height of mouth 4 of canister 2, as better illustrated in Fig. 5B.

The desiccant cartridge 1 thus conceived can be applied to a recharging container of the traditional type (not illustrated), that is, equipped with a cap having a dip tube and a connector, but without an opening or a valve. In this case, the air necessary to allow the extraction of the lubricant, can pass through a hole or a passage properly made between the cap and the container. This allows the cartridge to be used even on a lubricant refill canister of a known type, without the need to replace the cap or the entire container.

In addition, due to the fact that cartridge 1 is independent of canister 2 and cap 3, it is possible to change it, when the hygroscopic material is depleted or exhausted.

The casing 6 of the cartridge 1 is preferably made of a polymeric material, but can be made of a recyclable material or a recycled plastic, to reduce the environmental impact.

Cartridge 1 is preferably packaged in sealed sachets to preserve its functionality until the moment of use. In this way, until it is used, the hygroscopic material 9 of cartridge 1 is not likely to deteriorate.

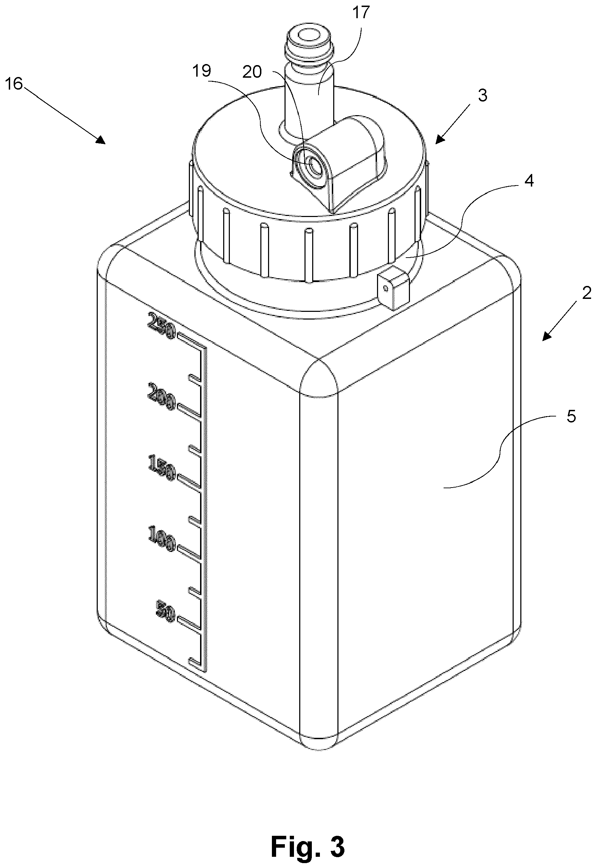

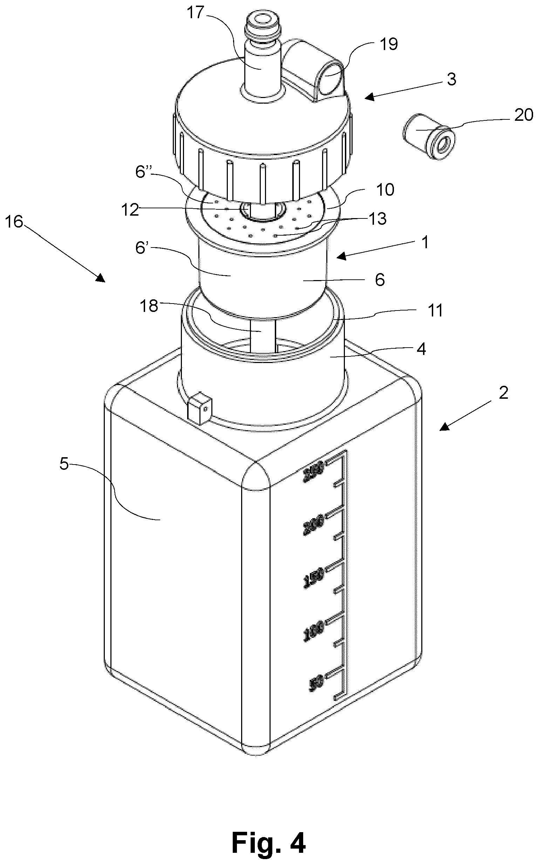

With reference to Fig. 3, a recharging container 16 is represented, comprising a refill canister 2 closed by a cap 3. As better shown in Fig. 4, between cap 3 and canister 2 is placed a desiccant cartridge 1.

Cap 3 is configured to connect to canister 2. In Fig. 5B and 5C it's visible a thread 27 inside the cap 3 and a corresponding counter-thread 28 on the canister 2. Other types of connections are possible, such as pressure or bayonet connections.

It is preferable to have a cap 3 screwable on canister 2, such as that of Fig. 5B and 5C, to ensure a better sealing between cap 3 and canister 2.

Cap 3 includes a connector 17 configured to allow coupling with a pipeline of a recharging station 21.

Cap 3 also includes a dip tube 18 which extends below the cap 3. The dip tube 18 is in fluid communication with connector 17. The dip tube 18 is configured to reach the bottom of compartment 5 of canister 2, as shown in Fig.5B. Through the dip tube 18 can therefore go up the lubricant 7 present in the canister 2, until it comes out of the recharging container 16 through the connector 17. The extraction of lubricant 7 from canister 2 takes place by means of vacuum. The recharging station 21 realizes vacuum, for example through a vacuum pump, and through a pipe tightly connected to the connector 17 the extraction of lubricant 7 from canister 2 is allowed.

Cap 3 is conformed so as that, when it is connected to canister 2, the rim 10 of cartridge 1 remains locked between the cap 3 and the canister 2. If cap 3 is configured to be screwable onto the canister 2, cap 3 abuts the rim 10 and does not abut with border 11 of mouth 4, as shown in Fig. 5C. In this way, the sealing that, in the absence of cartridge 1, would be realized between the inside of cap 3 and the border 11 of canister 2, it's now realized between cap 3 and cartridge 1 and between cartridge 1 and border 11 of canister 2. Consequently, rim 10 acts as a sealing gasket between cap 3 and canister 2.

Optionally, cap 3 and/or canister 2 include gaskets to cooperate with cartridge 1.

In one not illustrated alternative embodiment, cartridge 1 is trapped, but not clamped, between cap 3 and canister 2, therefore it's able to slightly move between them.

The environment enclosed between cap 3 and canister 2, within which the desiccant cartridge 1 is located, is therefore isolated from the external environment in a substantially hermetic manner.

To allow air to enter the container when extracting lubricant 7 from canister 2, cap 3 includes an opening 19, such as a hole or snorkel as shown in Fig. 3.

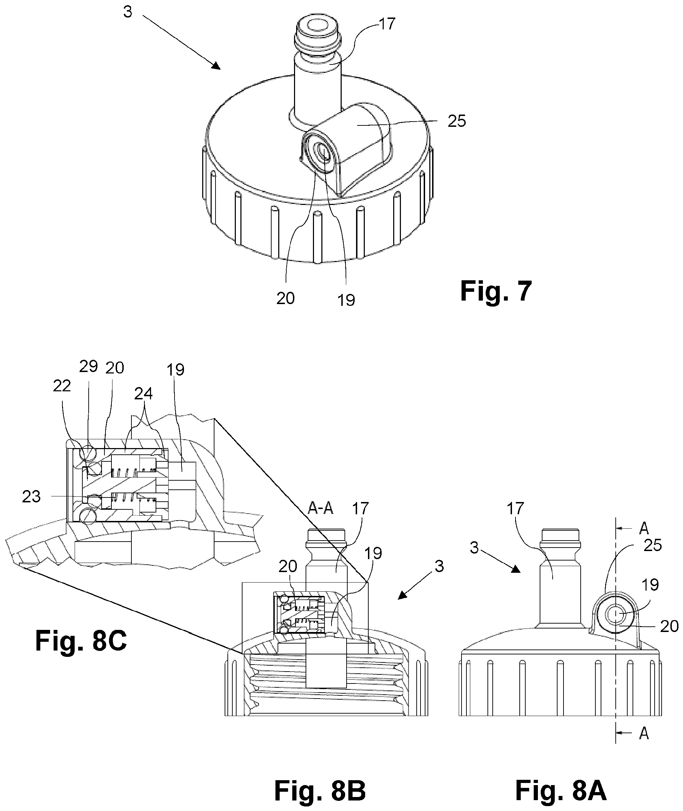

Inside this opening a valve 20 can be arranged. This valve 20 is preferably a one-way valve, like the one depicted in Fig. 8B and 8C, thus configured to allow air to enter in the canister 2 when a certain depression is reached in the container 16. Valve 20 allows to preserve the hygroscopic material 9 longer.

Alternatively, valve 20 can be a two-way valve, i.e. a valve that is normally closed and upon reaching predetermined thresholds of overpressure or depression, allows the entry or exit of air from canister 2.

In the embodiment illustrated in Fig. 8B and 8C, valve 20 includes a piston 22 that is axially movable within a structure 24. Piston 22 is pushed into an abutting position against the structure 24 by a spring 23. The structure 24, having a cylindrical shape, is then inserted in the opening 19 and the tightness between them is guaranteed by an o-ring gasket 29 arranged within an appropriate groove of the structure 24. The o-ring gasket 29 also has the function of allowing the partial or total expulsion of the structure 24 from the opening 19 in case of overpressure in the recharging container 16.

When lubricant 7 is drawn from recharging container 16 through the dip tube 18 and the connector 17, the valve 20 opens allowing air to enter in the canister 2.

In an alternative version not illustrated, valve 20 is a one-way mushroom valve placed in a through hole of cap 3.

In a further not illustrated embodiment, valve 20 is placed on canister 2 and not on cap 3. Alternatively, valve 20 is placed directly on cartridge 1. In this last embodiment, to isolate the compartment 5 of canister 2 from the external environment, one or more gaskets (not illustrated) are arranged on cartridge 1 to achieve a seal between the mouth 4 and the cartridge 1 and between the cap 3 and the cartridge 1. In this embodiment, valve 20 is positioned on the upper wall 14' of cartridge 1 and air is free to enter the existing space between cap 3 and cartridge 1. In this version of cartridge 1, the holes 13 are present only on the lower wall 14".

The air entering the defined space between cap 3 and canister 2 is then dehydrated by hygroscopic material 9 present in cartridge 1.

The air is in fact free to enter into the space 8 through the holes 13 of cartridge 1, both during the phase of introduction of air into the recharging container 16, and during any moment after this phase of introduction.

The recharging container 16 is assembled by inserting the cartridge 1, with the rim 10 facing upwards, inside the mouth 4 of canister 2, as shown in Fig. 4 and 5B.

Cartridge 1, as described above, has a height substantially equal to the height of the mouth 4, so it does not occupy space in compartment 5 that is useful for housing the lubricant 7.

Through the through channel 12 of cartridge 1 it is therefore possible to insert the dip tube 18 of cap 3, as illustrated in Fig. 4 and 5B. Optionally, the through channel 12 is equipped with a ring gasket (not shown) configured to allow the passage of the dip tube 18. The gasket adheres to it to ensure a seal between the casing 6 and the dip tube 18. Alternatively, the bottom surface of the cap 3 comprises a flared portion in which the dip tube 18 is inserted. This flared portion (not shown) is shaped so as to abut against the cartridge 1, preferably against its through channel 12, to create a seal between the cap 3 and the cartridge 1.

At this point, cap 3 including the valve 20 can be connected to the canister 2 in order to clamp the cartridge 1 between them.

The container 16 thus assembled can finally be positioned and connected to a recharging station 21 of a refrigerant fluid in a motor vehicle air conditioning system as shown in Fig. 6. This recharging station, of known type, is characterized by the recharging container 16 as defined above.

In conclusion, it is clear that the invention thus conceived is susceptible to numerous modifications or variations, all falling within the invention; moreover, all the details can be replaced by technically equivalent elements. In practice, the quantities can be varied according to technical needs.

## Claims

1. Desiccant cartridge (1) for a refill canister (2) of lubricant (7) comprising a mouth (4) and a compartment (5) for containing the lubricant (7), said cartridge (1) comprising:
- a casing (6) comprising a first portion of casing (6') and a second portion of casing (6") couplable together and shaped so as to define together a space (8);
- a hygroscopic material (9) placed inside said space (8) of the casing (6);
said casing (6) being shaped to be inserted at least partially inside said mouth (4) of the refill canister (2);
said casing (6) further comprising an rim (10) shaped to make a stop abutment of the casing (6) with a border (11) of said mouth (4) to prevent the cartridge (1) from coming into contact with the lubricant (7) contained in the canister (2);
**characterized in that**
said casing (6) comprises a through channel (12) and a plurality of holes (13) configured to constantly fluidly connect the space (8) of the casing (6) with the compartment (5) of the canister (2).

2. Desiccant cartridge (1) according to claim 1, in which the casing (6) has a cylindrical shape and said rim (10) is an annular flange arranged externally to the casing (6).

3. Desiccant cartridge (1) according to claim 2, wherein the through channel (12) has a cylindrical shape and is coaxial to the casing (6).

4. Desiccant cartridge (1) according to any one of the preceding claims, in which said first portion of the casing (6') and said second portion of the casing (6") are shaped to connect by interlocking.

5. Desiccant cartridge (1) according to any one of the preceding claims, wherein said first portion of casing (6') is shaped so as to form a collector within which the hygroscopic material (9) is arranged and said second portion of casing (6") is shaped so as to provide a closing lid for said collector.

6. Desiccant cartridge (1) according to any one of the preceding claims, wherein said plurality of holes (13) is arranged on a lower wall (14') of the casing or arranged on the lower wall (14') and on an upper wall (14") of the casing (6),

7. Desiccant cartridge (1) according to any one of the preceding claims, wherein said holes (13) are smaller than particles (15) of hygroscopic material (9) so as to prevent the same from falling into the compartment (5) of the canister (2).

8. Recharging container (16) for lubricant (7) comprising:
- a refill canister (2) comprising a mouth (4) and a compartment (5) for containing the lubricant (7);
- a desiccant cartridge (1) in accordance with one or more of the preceding claims associable to the mouth (4) of said canister (2);
- a cap (3) configured to be connected to the canister (2) to close it;
wherein said cap (3) comprises a connector (17) and a dip tube (18) fluidly connected to each other, and said dip tube (18) protrudes below the cap (3);
in which the dip tube (18) is shaped to fit into the through channel (12) of the casing (6) of the cartridge (1) and to substantially reach the bottom of the compartment (5) containing the lubricant (7).

9. Recharging container (16) for lubricant (7) according to claim 8, wherein said cap (3) and said canister (2) are shaped so as to clamp said cartridge (1) when said cap (3) is connected to said canister (2).

10. Recharging container (16) for lubricant (7) according to claim 8 or 9, wherein said cap (3) comprises an opening (19) for admitting air into the canister (2).

11. Recharging container (16) for lubricant (7) according to claim 10, wherein said opening (19) of the cap (3) comprises a valve (20) configured to allow air to enter in the canister (2) when the refill lubricant (7) is extracted through said connector (17).

12. Recharging station (21) for recharging a refrigerant fluid in an air conditioning system for motor vehicles comprising at least one recharging container (16) of lubricant (7) according to one or more of claims 8 to 11.

## Patentansprüche

1. Trockenmittelkartusche (1) für einen Nachfüllbehälter (2) mit Schmiermittel (7), umfassend eine Öffnung (4) und ein Fach (5) zur Aufnahme des Schmiermittels (7), wobei die Kartusche (1) Folgendes umfasst:
- ein Gehäuse (6), bestehend aus einem ersten Gehäuseteil (6') und einem zweiten Gehäuseteil (6"), die miteinander koppelbar sind und so geformt sind, dass sie gemeinsam einen Raum (8) definieren;
- ein hygroskopisches Material (9), das im Raum (8) des Gehäuses (6) angeordnet ist;
wobei das Gehäuse (6) so geformt ist, dass es zumindest teilweise in die Öffnung (4) des Nachfüllbehälters (2) eingesetzt werden kann;
wobei das Gehäuse (6) außerdem einen Rand (10) umfasst, der so geformt ist, dass er einen Anschlag für das Gehäuse (6) an einer Kante (11) der Mündung (4) bietet, um zu verhindern, dass die Kartusche (1) mit dem Schmiermittel in Kontakt kommt (7) im Behälter (2) enthalten;
**dadurch gekennzeichnet**
das Gehäuse (6) weist einen Durchgangskanal (12) und eine Vielzahl von Löchern (13) auf, die so konfiguriert sind, dass sie den Raum (8) des Gehäuses (6) ständig mit dem Fach (5) des Kanisters (2) flüssigkeitsverbunden halten.

2. Trockenmittelkartusche (1) nach Anspruch 1, wobei das Gehäuse (6) eine zylindrische Form aufweist und der Rand (10) ein ringförmiger Flansch ist, der außerhalb des Gehäuses (6) angeordnet ist.

3. Trockenmittelkartusche (1) nach Anspruch 2, wobei der Durchgangskanal (12) eine zylindrische Form aufweist und koaxial zum Gehäuse (6) ist.

4. Trockenmittelkartusche (1) nach einem der vorhergehenden Ansprüche, wobei der erste Teil des Gehäuses (6') und der zweite Teil des Gehäuses (6") so geformt sind, dass sie durch Verriegelung verbunden werden.

5. Trockenmittelkartusche (1) nach einem der vorhergehenden Ansprüche, wobei der erste Teil des Gehäuses (6') so geformt ist, dass er einen Sammler bildet, in dessen Inneren das hygroskopische Material (9) angeordnet ist, und der zweite Teil von das Gehäuse (6") so geformt ist, dass es einen Verschlussdeckel für den Kollektor bildet.

6. Trockenmittelkartusche (1) nach einem der vorhergehenden Ansprüche, wobei die Vielzahl von Löchern (13) an einer unteren Wand (14') des Gehäuses angeordnet ist oder an der unteren Wand (14') angeordnet ist und an einem Oberwand (14") des Gehäuses (6).

7. Trockenmittelkartusche (1) nach einem der vorhergehenden Ansprüche, bei der die Löcher (13) kleiner sind als die Partikel (15) des hygroskopischen Materials (9), um zu verhindern, dass letztere in das Fach fallen (5) des Behälters (2).

8. Nachfüllbehälter (16) für Schmiermittel (7) umfassend:
- einen Nachfüllbehälter (2), der eine Öffnung (4) und ein Fach (5) zur Aufnahme des Schmiermittels (7) umfasst;
- eine Trockenmittelkartusche (1) nach einem oder mehreren der vorhergehenden Ansprüche, die mit der Mündung (4) des Behälters (2) verbunden werden kann;
- eine Kappe (3), die so konfiguriert ist, dass sie mit dem Behälter (2) verbunden werden kann, um diesen zu verschließen;
wobei die Kappe (3) ein Verbindungsstück (17) und ein Tauchrohr (18) umfasst, die flüssigkeitsmäßig miteinander verbunden sind, und das Tauchrohr (18) unter die Kappe (3) hinausragt;
wobei das Tauchrohr (18) so geformt ist, dass es in den Durchgangskanal (12) des Gehäuses (6) der Kartusche (1) passt und im Wesentlichen den Boden des Fachs (5) erreicht, das das Schmiermittel (7) enthält.

9. Nachfüllbehälter (16) für Schmiermittel (7) nach Anspruch 8, wobei die Kappe (3) und der Behälter (2) so geformt sind, dass sie die Kartusche (1) greifen, wenn die Kappe (3) mit dem Behälter verbunden ist (2).

10. Nachfüllbehälter (16) für Schmiermittel (7) nach Anspruch 8 oder 9, wobei die Kappe (3) eine Öffnung (19) für den Zutritt von Luft in den Behälter (2) aufweist.

11. Nachfüllbehälter (16) für Schmiermittel (7) nach Anspruch 10, wobei die Öffnung (19) der Kappe (3) ein Ventil (20) aufweist, das so konfiguriert ist, dass Luft in den Kanister (2) eintreten kann, wenn das Nachfüllschmiermittel (7) durch den Anschluss (17) entnommen wird.

12. Ladestation (21) zum Laden eines Kältemittels in einer Klimaanlage für Kraftfahrzeuge umfassend mindestens einen Nachfüllbehälter (16) für Schmiermittel (7) nach einem oder mehreren der Ansprüche 8 bis 11.

## Revendications

1. Cartouche déshydratante (1) pour un récipient de recharge (2) de lubrifiant (7) comprenant une embouchure (4) et un compartiment (5) destiné à contenir le lubrifiant (7), ladite cartouche (1) comprenant :
- un boîtier (6) comprenant une première partie de boîtier (6') et une seconde partie de boîtier (6") qui pouvant être accouplées ensemble et qui sont conformées de manière à définir ensemble un espace (8);
- un matériau hygroscopique (9) placé à l'intérieur dudit espace (8) du boîtier (6);
ledit boîtier (6) étant conformé pour être inséré au moins partiellement à l'intérieur de ladite embouchure (4) de le récipient de recharge (2);
ledit boîtier (6) comprenant en outre un rebord (10) conformé pour réaliser une butée d'arrêt du boîtier (6) avec une bordure (11) de ladite embouchure (4) pour empêcher la cartouche (1) d'entrer en contact avec le lubrifiant (7) contenu dans le récipient (2) ;
**caractérisé en ce que**
ledit boîtier (6) comprend un canal traversant (12) et une pluralité de trous (13) configurés pour relier de manière fluide et constante l'espace (8) du boîtier (6) avec le compartiment (5) du récipient (2).

2. Cartouche déshydratante (1) selon la revendication 1, dans laquelle le boîtier (6) a une forme cylindrique et ledit rebord (10) est une bride annulaire disposée à l'extérieur du boîtier (6).

3. Cartouche déshydratante (1) selon la revendication 2, dans laquelle le canal traversant (12) a une forme cylindrique et est coaxial au boîtier (6).

4. Cartouche déshydratante (1) selon l'une quelconque des revendications précédentes, dans laquelle ladite première partie du boîtier (6') et ladite seconde partie du boîtier (6") sont conformées pour se connecter par verrouillage.

5. Cartouche déshydratante (1) selon l'une quelconque des revendications précédentes, dans laquelle ladite première partie du boîtier (6') est formée de manière à former un collecteur à l'intérieur duquel est disposé le matériau hygroscopique (9) et ladite seconde partie du boîtier (6") est formée de manière à fournir un couvercle de fermeture pour ledit collecteur.

6. Cartouche déshydratante (1) selon l'une quelconque des revendications précédentes, dans laquelle ladite pluralité de trous (13) est disposée sur une paroi inférieure (14') du boîtier ou disposée sur la paroi inférieure (14') et sur une paroi supérieure (14") du boîtier (6).

7. Cartouche déshydratante (1) selon l'une quelconque des revendications précédentes, dans laquelle lesdits trous (13) sont plus petits que les particules (15) du matériau hygroscopique (9) de manière à empêcher ces dernières de tomber dans le compartiment (5) du récipient (2).

8. Récipient de recharge (16) pour lubrifiant (7) comprenant:
- un récipient de recharge (2) comprenant une embouchure (4) et un compartiment (5) destiné à contenir le lubrifiant (7);
- une cartouche déshydratante (1) selon une ou plusieurs des revendications précédentes qui peut être associée à l'embouchure (4) dudit récipient (2);
- un capuchon (3) configuré pour être relié au récipient (2) afin de le fermer;
dans lequel ledit capuchon (3) comprend un connecteur (17) et un tube plongeur (18) reliés fluidiquement l'un à l'autre, et ledit tube plongeur (18) fait saillie sous le capuchon (3) ;
dans lequel le tube plongeur (18) est formé pour s'insérer dans le canal traversant (12) du boîtier (6) de la cartouche (1) et pour atteindre sensiblement le fond du compartiment (5) contenant le lubrifiant (7).

9. Récipient de recharge (16) pour lubrifiant (7) selon la revendication 8, dans lequel ledit capuchon (3) et ledit récipient (2) sont conformés de manière à serrer ladite cartouche (1) lorsque ledit capuchon (3) est connecté audit récipient (2).

10. Récipient de recharge (16) pour lubrifiant (7) selon la revendication 8 ou 9, dans lequel ledit capuchon (3) comprend une ouverture (19) pour l'admission d'air dans le récipient (2).

11. Récipient de recharge (16) pour lubrifiant (7) selon la revendication 10, dans lequel ladite ouverture (19) du capuchon (3) comprend une valve (20) configurée pour permettre à l'air d'entrer dans le récipient (2) lorsque le lubrifiant de recharge (7) est extrait à travers ledit connecteur (17).

12. Station de recharge (21) pour recharger un fluide frigorigène dans un système de climatisation pour véhicules automobiles comprenant au moins un récipient de recharge (16) de lubrifiant (7) selon une ou plusieurs des revendications 8 à 11.
